# EUROPÄISCHE PATENTANMELDUNG

(11) **EP 1 031 760 A1**
(43) Veröffentlichungstag der Anmeldung: **30.08.2000**
(21) Anmeldenummer: 00103238.2
(22) Anmeldetag: 17.02.2000
(51) Int. Cl.: F16F 15/26, F02B 75/06

(54) **Vorrichtung zum Massen-und/oder Momentenausgleich bei einer Hubkolbenbrennkraftmaschine**

(30) Priorität: 26.02.1999 DE 19908437
(71) Anmelder: META MOTOREN- UND ENERGIE-TECHNIK GMBH, D-52134 Herzogenrath (DE)
(72) Erfinder: Schander, Klemens Dipl.-Ing., 52134 Herzogenrath (DE)
(74) Vertreter: Barske, Heiko, Dr. rer. nat.

(57) **Zusammenfassung**

Eine Vorrichtung zum Massen- und/oder Momentenausgleich bei einer Hubkolbenbrennkraftmaschine mit wenigstens einem Kolben, dessen Pleuel mit dem Kurbelzapfen (8) einer Kurbelwelle (2) verbunden ist, enthaltend zwei von der Kurbelwelle angetriebene, sich gegensinnig zueinander mit doppelter Kurbelwellendrehzahl drehende und voneinander radial sowie senkrecht zur Motormittellinie beabstandete Ausgleichswellen (16, 22), deren Achsen parallel zur Achse der Kurbelwelle gerichtet sind, und die mit exzentrisch an ihnen angeordneten Ausgleichsgewichten (24, 26) versehen sind, ist dadurch gekennzeichnet, daß die eine Ausgleichswelle (16) mit zwei drehfest mit ihr verbundenen Zahnrädern (14, 18) versehen ist, von denen das eine zum Antrieb der Ausgleichswelle mit einem an der Kurbelwelle (2) ausgebildeten Zahnrad (12) in Eingriff ist und das andere (18) mit einem Ausgleichsgewicht (24) ausgebildet ist, und ein weiteres Zahnrad (20) drehantreibt, das die mit einem weiteren Ausgleichsgewicht (26) ausgebildete Ausgleichswelle bildet und gleichachsig mit der Kurbelwelle auf dieser gelagert ist.

## Beschreibung

Die Erfindung betrifft eine Vorrichtung zum Massen- und/oder Momentenausgleich bei einer Hubkolbenbrennkraftmaschine gemäß dem Oberbegriff des Anspruchs 1.

Für den akustischen und den fühlbaren Komfort von mit einer Hubkolbenbrennkraftmaschine ausgerüsteten Fahrzeugen ist ein guter Massen- und/oder Momentenausgleich von Bedeutung. Nur dadurch läßt sich die Erregung von Schwingungen vermeiden, die von dem Motor auf das Fahrzeug übertragen werden und den Komfort in nachteiliger Weise beeinflussen. Eine in der Praxis eingesetzte Maßnahme zum Massen- und/oder Momentenausgleich ist der sogenannte Lancester-Ausgleich, bei dem in Abstand von der Kurbelwelle und in gegenseitigem Abstand zwei mit Ausgleichsgewichten versehenen Ausgleichswellen angeordnet werden, die von der Kurbelwelle angetrieben werden und sich mit doppelter Kurbelwellendrehzahl gegensinnig drehen, wie er z.B. aus der DE 40 10 856 A1 bekannt ist.

Eine Eigenart des Lancester-Ausgleichs liegt darin, daß er verhältnismäßig viel Bauraum beansprucht, was den Motor insgesamt vergrößert und schwerer macht, und daß die zusätzlich erforderlichen Lager sowie der Antrieb der Ausgleichswellen eine Erhöhung der Reibungsverluste bedeuten.

Der Erfindung liegt die Aufgabe zugrunde, eine Vorrichtung zum Massen- und/oder Momentausgleich bei einer Hubkolbenbrennkraftmaschine zu schaffen, die bei guter Wirksamkeit mit geringem Bauaufwand realisierbar ist.

Diese Aufgabe wird mit den Merkmalen des Hauptanspruchs gelöst.

Der erfindungsgemäße Massen- und/oder Momentenausgleich ist mit Hilfe nur einer neben der Kurbelwelle und von einer Außenverzahnung der Kurbelwelle angetriebenen Ausgleichswelle realisierbar, die wiederum ein an der Kurbelwelle gelagertes Ausgleichszahnrad antreibt. Der zusätzliche Bauaufwand und der zusätzliche Platzbedarf sind gering. Es ist nur eine geringe Anzahl zusätzlicher Lager erforderlich. Die Antriebsverluste sind minimal.

Die Unteransprüche sind auf vorteilhafte Ausführungsformen und Weiterbildungen der erfindungsgemäßen Vorrichtung gerichtet.

Die Erfindung wird im folgenden anhand schematischer Zeichnungen beispielsweise und mit weiteren Einzelheiten erläutert.

Es stellen dar:
- Fig. 1: einen Langsschnitt durch eine Kurbelwelle mit zusätzlichen Massen- und Momentenausgleich,
- Fig. 2: eine Schnittansicht der Anordnung gemäß Fig. 1, geschnitten in der Ebene A-A in einer Drehstellung und
- Fig. 3: die Ansicht der Fig. 2 bei um 270° weitergedrehten Ausgleichsgewichten.

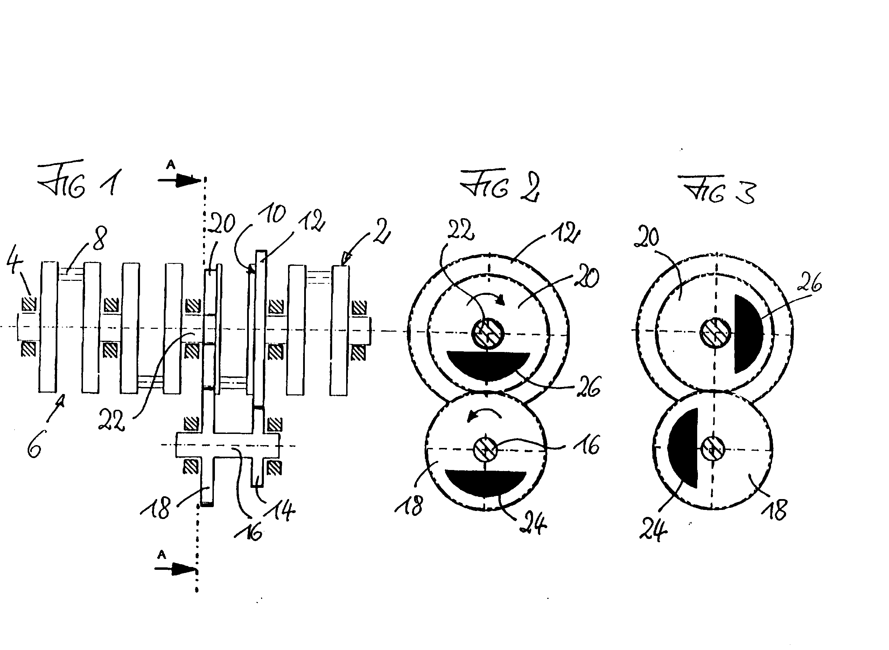

Fig. 1 zeigt eine Kurbelwelle 2 eines Vier-Zylinder-Motors, die an fünf Lagern 4 gelagert ist und vier Kropfungen 6 mit je einem Kurbelzapfen 8 zum Anlenken eines nicht dargestellten Pleuels aufweist.

Die Kurbelwelle 2 ist beispielsweise die Kurbelwelle eines Vier-Zylinder-Reihenmotors, dessen Zylinder gemäß Fig. 1 über der Kurbelwelle in der Papierebene angeordnet sind. Die beiden äußeren Kurbelzapfen befinden sich in der dargestellten Stellung in ihrem oberen Totpunkt, die beiden inneren Kurbelzapfen befinden sich in ihrem unteren Totpunkt.

Die rechtsseitige Kurbelwange 10 der von links gemäß Fig. 1 dritten Kröpfung ist als Zahnrad 12 mit einer Außenverzahnung ausgebildet, die mit der Außenverzahnung eines Zahnrades 14 kämmt, das einteilig mit einer Ausgleichswelle 16 ausgebildet oder starr an der Ausgleichswelle 16 angebracht ist, die ein weiteres, drehfest mit ihr verbundenes Zahnrad 18 aufweist. Das Zahnrad 18 kämmt mit einem Zahnrad 20, das auf dem Lagerzapfen 22 der Kurbelwelle 2 gelagert ist, der wiederum in dem gemäß Fig. 1 dritten Lager 4 von links gelagert ist.

Die Achse der Ausgleichswelle 16 ist parallel zur Achse der Kurbelwelle 2 und befindet sich gemäß Fig. 1 in der Bewegungsebene der nicht dargestellten Kolben auf der von dem Kolben abgewandten Seite der Kurbelwelle.

Der Außendurchmesser des Zahnrades 12 ist doppelt so groß wie der des Zahnrades 14, so daß sich die Ausgleichswelle 16 mit doppelter Kurbelwellendrehzahl dreht. Die Zahnräder 18 und 20 haben den gleichen Durchmesser, so daß sie sich mit gleicher Drehzahl aber in entgegengesetzter Richtung drehen.

Fig. 2 zeigt eine Schnittansicht auf die Anordnung gemäß Fig. 1, geschnitten in der Ebene A-A Wie ersichtlich, sind die Zahnräder 18 und 20 mit je einem Ausgleichsgewicht 24 und 26 versehen, wobei die Anordnung derart ist, daß sich die beiden Ausgleichsgewichte 24 und 26 in der dargestellten Stellung in ihrem unteren Totpunkt befinden bzw. in derjenigen Stellung, die zu der Stellung der den äußeren Kurbelzapfen 8 zugehörigen Kolben, die sich gerade im oberen Totpunkt befinden, entgegengesetzt ist. Auf diese Weise erfolgt ein Massenausgleich der Brennkraftmaschine.

Fig. 3 zeigt die gleiche Ansicht wie Fig. 2, jedoch in einer um 270° weitergedrehten Stellung der sich gegensinnig drehenden Zahnräder 18 und 20. Das Ausgleichsgewicht 26 befindet sich gemäß Fig. 3 rechts von der Längsmittelebene des Motors und das Ausgleichsgewicht 24 befindet sich links von der Längsmittelebene des Motors. Wie ersichtlich, wird durch die beiden Ausgleichsgewichte 24 und 26 ein Moment erzeugt, das zum Ausgleich von Massenmomenten des Motors dient.

Dadurch, daß die Größe der Ausgleichsgewichte 24 und 26 sowie der Abstand zwischen dem Lagerzapfen 22 und der Ausgleichswelle 16 innerhalb weiter Grenzen frei gewählt werden können, ist mit der erfindungsgemäßen Anordnung ein zufriedenstellender Massen- und Momentenausgleich zweiter und höherer Ordnungen moglich. Beim Kippmomentenausgleich bezüglich Momenten zweiter und höherer Ordnung parallel zur Kurbelwellenachse läßt sich dabei ein günstiger Kompromiß zwischen Gaskräften und Massenkräften über ein breites Drehzahlband erreichen.

Die erfindungsgemäße Anordnung, die lediglich eine leichte Modifizierung der Kurbelwelle erfordert, jedoch bei weitgehend allen Kurbelwellen keine axiale Verlängerung der Kurbelwelle oder eine Verschiebung irgendwelcher Lagerzapfen bedeutet, ist innerhalb des Kurbelgehäuses durch Modifizierungen des Lagergestells (Modifizierung des mittleren Lagers; zusätzliche Lagerung der Ausgleichswelle) realisierbar und kann ohne Eingriffe in den Zylinderblock an vorhandenen Motoren angebracht werden.

Die zweifach gelagerte Ausgleichswelle 16 und das auf dem Lagerzapfen 22 gelagerte Zahnrad 20, das sich gleichsinnig mit der Kurbelwelle dreht, sind nur mit einer geringen zusätzlichen Reibung verbunden.

Die Zahnradeingriffe sind stabil, da sie mit nur kleinen Wellen- oder Lagerdeformationen beaufschlagt sind, und laufen daher mit guter Laufruhe.

Die Lager und die Wellen des Massenausgleichs weisen keinerlei gegensinnige Deformationen auf. Bei einem Einbau in die Ölwanne tritt nur geringe Ölverschäumung auf.

Vorteilhafterweise ist die Anordnung gemäß Fig. 1 derart, daß sich die Ausgleichsgewichte 24 und 26 jeweils durch die Längsmittellinie des Motors bewegen, die etwa in der in Fig. 1 strichpunktiert eingetragenen Schnittebene liegt und durch den Schnitt der Längsmittelebene des Motors mit der Quermittelebene bzw der jeweiligen Symmetrieebenen gegeben ist.

Die Erfindung ist für unterschiedlichste Kurbeltriebe und Kurbelwellen einsetzbar. Die Kurbelwelle gemäß Fig 1 muß nicht zwangsläufig die eines Vier-Zylinder-Reihenmotors sein; es kann sich auch um die Kurbelwelle eines V-Motors handeln, oder eine sonstige Kurbelwelle, bei der die Kurbelzapfen sich nicht alle gleichzeitig in der Zeichnungsebene befinden.

Es versteht sich, daß sich der erfindungsgemäße Massenausgleich auch für andere Zylinderzahlen als vier eignet, beispielsweise drei Zylinder, sechs Zylinder in V-Anordnung, acht Zylinder, fünf Zylinder usw..

Die Erfindung kann auch dahingehend abgeändert werden, daß anstelle der Zahneingriffe mit Ketteneingriffen und ggf Zusatzgliedern zur Drehrichtungsumkehr gearbeitet wird.

## Patentansprüche

1. Vorrichtung zum Massen- und/oder Momentenausgleich bei einer Hubkolbenbrennkraftmaschine mit wenigstens einem Kolben, dessen Pleuel mit dem Kurbelzapfen (8) einer Kurbelwelle (2) verbunden ist,
enthaltend
zwei von der Kurbelwelle angetriebene, sich gegensinnig zueinander mit doppelter Kurbelwellendrehzahl drehende und voneinander radial sowie senkrecht zur Motormittellinie beabstandete Ausgleichswellen (16, 22), deren Achsen parallel zur Achse der Kurbelwelle gerichtet sind, und die mit exzentrisch an ihnen angeordneten Ausgleichsgewichten (24, 26) versehen sind,
dadurch gekennzeichnet, daß
die eine Ausgleichswelle (16) mit zwei drehfest mit ihr verbundenen Zahnrädern (14, 18) versehen ist, von denen das eine zum Antrieb der Ausgleichswelle mit einem an der Kurbelwelle (2) ausgebildeten Zahnrad (12) in Eingriff ist und das andere (18) mit einem Ausgleichsgewicht (24) ausgebildet ist, und ein weiteres Zahnrad (20) drehantreibt, das die mit einem weiteren Ausgleichsgewicht (26) ausgebildete Ausgleichswelle bildet und gleichachsig mit der Kurbelwelle auf dieser gelagert ist.

2. Vorrichtung nach Anspruch 1, dadurch gekennzeichnet, daß das an der Kurbelwelle (2) ausgebildete Zahnrad (12) durch eine Kurbelwange (10) der Kurbelwelle gebildet ist

3. Vorrichtung nach Anspruch 1 oder 2, dadurch gekennzeichnet, daß die andere Ausgleichswelle bildende Zahnrad (20) auf einem Lagerzapfen (22) der Kurbelwelle (2) gelagert ist.

4. Vorrichtung nach einem der Ansprüche 1 bis 3, dadurch gekennzeichnet, daß die beiden Ausgleichsgewichte (24, 26) derart an den den zugehörigen Zahnrädern (18, 20) angebracht sind, und die Phasenbeziehung zwischen den Zahnrädern derart ist, daß sich die beiden Ausgleichsgewichte gleichzeitig in einer bezogen auf die Kolbenbewegung untersten Stellung befinden, so daß zumindest ein Teilausgleich von Massenkräften wenigstens zweiter Ordnung erfolgt.

5. Vorrichtung nach einem der Ansprüche 1 bis 4, dadurch gekennzeichnet, daß der Abstand der Drehachsen der mit den Ausgleichsgewichten versehenen Zahnräder (18, 20) und die Ausgleichsgewichte (24, 26) derart aufeinander abgestimt sind, daß Kippmomente parallel zur Kurbelwellenachse wenigstens zweiter Ordnung zumindest teilweise ausgeglichen werden.

6. Vorrichtung nach einem der Ansprüche 1 bis 5, dadurch gekennzeichnet, daß sich die mit den beiden Zahnrädern (14, 18) ausgebildete Ausgleichswelle (16) in einer durch die Kolbenbewegung und die Kurbelwellenachse gebildeten Ebene auf der von dem (n) Kolben abgewandten Seite der Kurbelwelle (2) befindet.

7. Vorrichtung nach einem der Ansprüche 1 bis 6, dadurch gekennzeichnet, daß sich die mit den Ausgleichsgewichten (24, 26) versehenen Zahnräder (18, 20) zumindest annähernd in einer Ebene quer durch die Kurbelwelle (2) befinden, wobei die Lage der Ebene bezogen auf die Kurbelzapfen (8) zu ihren beiden Seiten symmetrisch ist.

8. Vorrichtung nach einem der Ansprüche 1 bis 7, dadurch gekennzeichnet, daß die Kurbelwelle (2) vier Kropfungen mit zugehörigen Kurbelzapfen (8) aufweist, wobei jeweils die beiden inneren und die beiden äußeren Kröpfungen etwa gleichsinnig sind und die inneren und äußeren um etwa 180° gegeneinander versetzt sind, und daß die mit den Ausgleichsgewichten (24, 26) versehenen Zahnräder (18, 20) derart angeordnet und ausgebildet sind, daß sich die Ausgleichsgewichte gleichzeitig und gleichphasig etwa in der Motormittellinie befinden, so daß sie sich nach einer Drehung um jeweils 90° mit dem axialen Versatz der Achsen der zugehörigen Zahnräder an entgegengesetzten Seiten der Motormittellinie befinden.
